Europäisches Patentamt

European Patent Office

Office européen des brevets

(11) Veröffentlichungsnummer: **0 412 242 A1**

# (12) EUROPÄISCHE PATENTANMELDUNG

(21) Anmeldenummer: 90105427.0

(22) Anmeldetag: 22.03.90

(51) Int. Cl.5: **G02B 6/16, G02B 6/44**

(30) Priorität: 11.08.89 DE 3926592

(43) Veröffentlichungstag der Anmeldung:
13.02.91 Patentblatt 91/07

(84) Benannte Vertragsstaaten:
**DE ES FR GB IT NL**

(71) Anmelder: **AEG KABEL Aktiengesellschaft**
**Bonnenbroicher Strasse 2-14**
**D-4050 Mönchengladbach 2(DE)**

(72) Erfinder: **Jostan, Josef, Dr.**
**Haslacher Weg 21**
**D-7900 Ulm(DE)**
Erfinder: **Zamzow, Peter**
**Erlenstrasse 5b**
**D-4630 Bochum 1(DE)**
Erfinder: **Schaefers, Klaus, Dr.**
**Stopfsweg 20**
**D-4050 Mönchengladbach 5(DE)**

(54) **Optische Faser.**

(57) Bei einer optischen Faser mit einer Beschichtung aus Kunststoff, welche über dem Lichtwellenleiter angeordnet ist, ist vorgesehen, daß direkt auf Primär- oder Sekundärschutzschicht eine dünne Polymerschicht (4) von 1 μm bis 125 μm Stärke und geringer Wasserdampfdurchlässigkeit angeordnet ist.

FIG.1

## OPTISCHE FASER

Die Erfindung betrifft eine optische Faser nach dem Oberbegriff des Anspruchs 1. Optische Fasern bestehen im allgemeinen aus einem Kern und einem Mantel und zylindrischer Form, in welchen die Lichtwellen geführt werden. Da überwiegend Quarzglas zur Herstellung dieser Fasern benutzt wird, ist infolge von Mikrorissen ein Bruch der Fasern nicht auszuschließen. Die Risse, welche bei der Herstellung in optischem Glas durch die Abkühlung entstehen, können durch Eindringen von Wasser von selbst wachsen. Die eigentliche Glasfaser wird im allgemeinen mit einem lackähnlichen Material und einer Hülle aus Kunststoff beschichtet, um die mechanische Festigkeit zu verbessern.

Glasfasern, welche auf diese Weise mit Hüllen umgeben wurden, weisen jedoch in optischen Faserkabeln noch immer verschiedene Mängel auf. Beispielsweise treten bei äußeren Druck- oder Biegebeanspruchungen Brüche in den Faserkernen auf.

Umhüllte optische Fasern, die den oben genannten Aufbau aufweisen, sind bekannt. Nach dem in der US-PS 39 80 390 beschriebenen Verfahren wird eine aus einer Schmelze gesponnene Glasfaser vor ihrem Kontakt mit der Umgebung oder anderen festen Körpern mit einem Harzüberzug versehen, auf den seinerseits durch Schmelzextrudieren ein weiterer Überzug aus einer thermoplastischen Harzmasse aufgebracht wird. Der erste Überzug, welcher als primärer Überzug bezeichnet wird, besteht aus einer harzigen Flüssigkeit, welche unmittelbar nach dem Ziehen der Faser aus der sogenannten Ziehzwiebel auf die Oberfläche der Faser aufgebracht wird. Der Überzug dient dazu, die ursprüngliche Festigkeit des Glasmaterials aufrechtzuerhalten; während der anschließend aufgebrachte Überzug aus einer thermoplastischen Harzmasse gegenüber mechanischen Beanspruchungen schützen soll. Diese sekundäre Schutzschicht wird durch Extrusion aufgebracht. Der Schutz der Fasern bei derartigen Überzügen besteht aber hauptsächlich darin, daß mechanische Verletzungen und Mikrobiegungen weitgehend verhindert werden; jedoch schützt diese Umhüllung in der Regel nicht ausreichend vor Feuchtigkeit.

Wasser diffundiert besonders leicht durch Kunststoffe, und nur ganz spezielle Kunststoffe haben die Eigenschaft, gegen Wasserdampf nur geringe Durchlässigkeit zu zeigen. Außerdem quellen sowohl der primäre als auch der sekundäre Überzug durch Wasseraufnahme auf, und die Haftung zwischen Überzug und Faser wird stark herabgesetzt. Dadurch entstehen beim Absetzen der Schichten, welche die Glasfaser umgeben, Probleme durch ungleichmäßiges Ablösen der Überzugsschichten.

Der Erfindung liegt die Aufgabe zugrunde, eine gegen die Einwirkung von Wasser geschützte optische Faser zu schaffen, welche sich leicht absetzen läßt, um eine genügende Faserlänge für den Spleißvorgang zu gewinnen. Die Diffusion von Wasserdampf soll wirksam herabgesetzt werden, so daß die optische Faser bezüglich ihrer mechanischen und optischen Eigenschaften eine hohe Lebensdauer haben kann.

Einsatzgebiete der Erfindung sind alle Informationsübertragungsstrecken, mit Glasfasern, bei denen es auf eine besonders hochwertige Übertragung, eine lange Lebensdauer und eine gute Absetzbarkeit beim Vorbereiten des Spleißes.

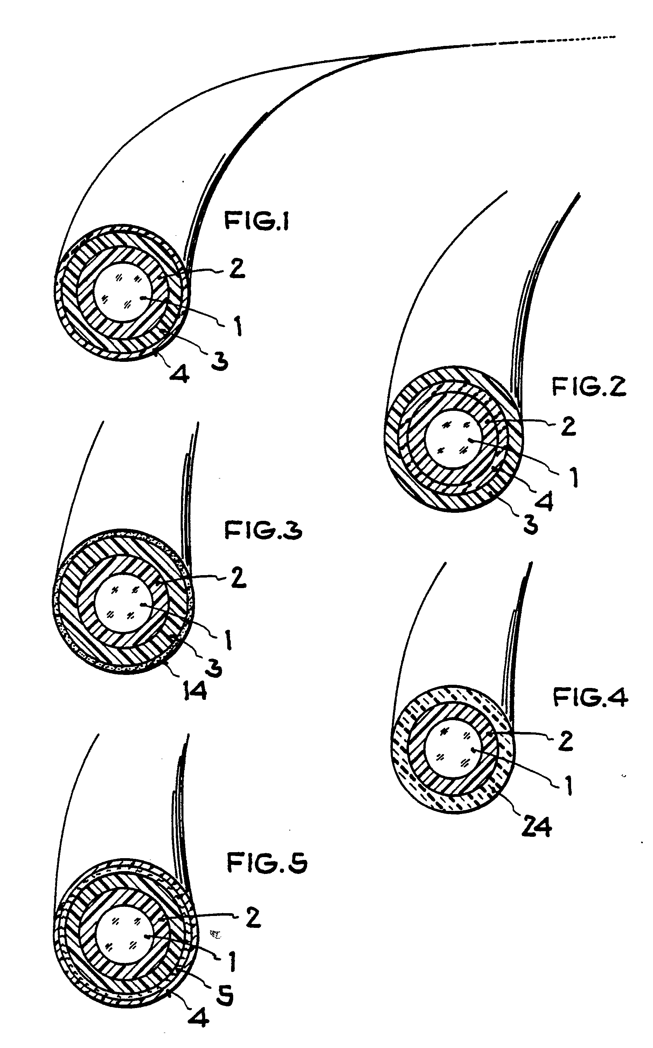

Die Erfindung wird nachstehend anhand der Zeichnung näher erläutert. Dabei zeigen Figur 1 - 5 Faserquerschnitte in schematischer Darstellung. In Figur 1 ist auf die Glasfaser das Primär-Coating aufgetragen, darauf das Sekundär-Coating extrudiert und zum Schluß die Wasserdampfsperrschicht aufgebracht. Figur 2 zeigt eine Anordnung, bei der die Dampfsperre zwischen primärem und sekundärem Überzug angeordnet ist. In Figur 3 hat die Dampfsperre eine Zusatzfunktion; sie dient der Unterscheidung der einzelnen optischen Fasern durch Codierung mittels Farbmarkierungen. In Figur 4 ist eine Möglichkeit aufgezeigt, bei der die Dampfsperre zusätzlich die Funktion der sekundären Schutzschicht als mechanisch widerstandsfähige Schicht übernimmt. Figur 5 zeigt eine weitere Variante, bei der die zur Codierung dienende Farbschicht unter der Dampfsperre angeordnet ist.

Zur Verbesserung des Oberflächenschutzes von optischen Quarzglasfasern wird eine zusätzliche Versiegelung oder Imprägnierung des bekannten Oberflächenschutzes angestrebt.

Beispielsweise bestehen die Überzüge aus Polyacrylatschichten, insbesondere von Polyurethanacrylat- und/oder Polyepoxidacrylat- und/oder Polyesteracrylatschichten sowie deren Copolymerschichten einschließlich ihrer silan-, silyl-, siloxan-, halogensilan- oder silazan-modifizierter Derivate. Diese Schutzschichten sind vorzugsweise UV-gehärtet. Die Wasserdampfsperrschicht besteht vorzugsweise aus einer dünnen Schicht eines Polymeren mit sehr geringer Wasseraufnahme oder Wasserdampfdurchlässigkeit.

Diese dünnen Sperrschichten können aus der Gasphase, aus der flüssigen Phase, aus einer Lösung, einer Emulsion oder Suspension aufgebracht werden. Eine solche dicht aufgebrachte Schicht verschließt zunächst einmal die vorhandenen Poren im Polymer-Material der zweiten oder ersten Überzugsschicht. Die sperrende Wirkung gegen Wasserdampf und andere Dämpfe beruht auf den physikalischen Eigenschaften oder dem besonderen chemischen und struktuellen Aufbau der für die Sperrschicht verwendeten Polymere. Insbesondere sind die Makromoleküle des Polymeren weitgehend unpolar und/oder halogenhaltig und damit hydrophob. Die Polymernetzwerke sind homogen, hochvernetzt, frei von Verunreinigungen und somit besonders dicht ausgebildet.

Beispiele für solche Sperrschichtmaterialien und ihrer Aufbringung werden im folgenden angegeben.

Beispiel 1:

Prozeßschritte für die Abscheidung von Polyparaxylylen, Poly-monochlorparaxylylen, Polydichloroparaxylylen oder entsprechenden Derivaten sind innerhalb einer geschlossenen Anlage:
- Verdampfen des Dimeren (z. B. Diparaxylylen) bei etwa 175° C; 1 mbar
- Pyrolysieren des Dimeren bei 680° C; 0,5 mbar
- Abscheiden bei 35° C; 0,1 mbar.

Je nach Abscheidungszeit kann eine 1 bis größer 10 μm dicke porenfreie und sehr dichte Schicht erhalten werden.

Die Wasseraufnahme beträgt nach 24 Stunden bei dieser Schicht 0,06 % (Polyparaxylylen) oder gar nur 0,01 % (Polymonochloroparaxylylen) im Vergleich zu 3 % bei Polyurethanacrylat. Die Wasserdampfpermeation liegt bei 37° C und 90 % relativer Luftfeuchte und zunehmender Chlorsubstitution des Polymeren bei 1,6 - 0,5 - 0,25 rel. Einheiten und absolut betrachtet um zwei bis drei Zehnerpotenzen niedriger als bei Polyacrylatschichten.

Beispiel 2:

Bei der Abscheidung von Polymerschichten aus Kohlenwasserstoffen, fluorhaltige Kohlenwasserstoffen oder siliciumhaltigen Kohlenwasserstoffen werden das Magnetron-Sputterverfahren bzw. die Plasmapolymerisation z. B. durch DC-, RF- oder Mikrowellen-Plasmapolymerisation (letztere beispielsweise bei 2450 MHz, 2,5 kW-Generator, Ar-Druck 1 bis 40 Pa) angewendet. Dabei werden folgenden Monomergruppen verwendet:
- Acetylen, Ethylen, Methan oder höhere Alkine, Alkene und Alkane, Benzol und seine Homologe
- Tetrafluorethylen, Tetrafluormethan, Chlordifluormethan, Hexafluorpropen oder ähnliche Halogenwasserstoffe
- Hexamethyldisiloxan, Hexamethyldisilazan, Trimethylchlorsilan oder ähnliche siliciumorganische Verbindungen.

Je nach Verfahrensbedingungen (Substrattemperatur, Monomer-Flußrate, Trägergas, Druck, Bias-Spannung, Mikrowellenleistung und -frequenz) können weiche bis harte Schichten erhalten werden, deren chemische Zusammensetzung entsprechend von Polykohlenwasserstoffen bis zu α-Kohlenstoffschichten variieren kann. Die gewünschte Zusammensetzung und Eigenschaft ist somit einstellbar, beispielsweise die Härte bis HV 5000. Dieses Kriterium ist u. a. auch ein Maß für die Diffusionshemmung solcher Schichten. Die Schichtdicke kann 0,5 μm oder mehr betragen.

Beispiel 3:

Bei der Abscheidung von Polyethylen, Polypropylen oder Polymethylpenten aus der flüssigen Phase wird beispielsweise eine fünfprozentige Lösung (bzw. Suspension) des durch Kaltmahlen und Sieben erzeugten Feinstpulvers (< 35 μm Korngröße) in Dekalin (Deca-hydronaphthalin) bei 100° C verwendet. Die Faser, welche mindestens einen Oberflächenschutz durch einen Primärüberzug erhalten hat, wird in die Flüssigkeit eingetaucht, und man erhält nach Verdampfen der Hauptmenge des Lösungsmittels und Aufschmelzen bzw. -sintern des Polymeranteils bei 150° -200° C etwa 1 - 5 μm dicke Schichten. Diese haben - wie beispielsweise von Polyethylen bekannt - niedrige Wasserdampfdurchlässigkeit. Härte und Abriebfestigkeit der Schicht lassen sich durch geeignete Wahl und Mischung mehrerer Komponenten (Hochdruck-, Niederdruck-, Linearpolyethylen) und des in der Schicht verbleibenden Lösungsmittelgehaltes einstellen. Je höher letzterer ist, desto weicher und gelartiger sind die Versiegelungsschichten.

Beispiel 4:

Die mit dem Primärüberzug und eventuell auch mit einem Sekundärüberzug ausgerüstete optische Faser wird durch Tauchen (oder Benetzen) versiegelt. Dabei wird die Faser in flüssiges Monomer oder Olygomer eines thermisch aushärtenden oder UV-reaktiven Stoffes, z. B. eines Acrylats getaucht, mit nachfolgender Wärmebehandlung und/UV-Bestrahlung. Dadurch quillt der auf der Faser aufgebrachte Überzug je nach Dauer der Eintauch- oder Benetzungszeit mehr oder weniger tief auf. Dadurch können Monomere oder niedermolekulare Olygomermoleküle in das Polymernetzwerk des Faserüberzugs eindiffundieren. Diese Olygomermoleküle reagieren innerhalb des Polymernetzwerkes mit noch verbliebenen funktionellen Gruppen des Polymeren und mit sich selbst, so daß die räumliche Vernetzung des Polymeren durch zusätzliche Bindungen verstärkt wird. Die im Polymernetzwerk noch vorhandenen Polymerisations-Initiatoren wirken hierbei durch Radikalbildung während der thermischen bzw. insbesondere während der UV-Einwirkung unterstützend. Die nicht vernetzenden Monomer-oder Olygomeranteile werden durch die Wärmebehandlung verflüchtigt, so daß die Quellung des Faserüberzugs zurückgeht und insgesamt ein dichteres Überzugsgefüge insbesondere im oberflächennahen Bereich erzielt wird.

Als Monomere können beispielsweise monofunktionelle Acrylate wie 2-Ethylhexylacrylat oder 2-Hydroxyethylacrylat, difunktionelle Acrylate wie 1,4-Butandioldiacrylat oder 1,6-Hexandioldiacrylat, trifunktionelle Acrylate wie Trimethylolpropantriacrylat oder Pentaerythrittriacrylat oder insbesondere Gemische aus solchen Monomeren und/oder ihren Oligomeren eingesetzt werden. Weitere Anwendungsbeispiele sind N-Vinylpyrrolidon oder andere thermisch IR- oder UV-polymerisierbare Stoffe.

**Ansprüche**

1. Optische Faser mit einer Beschichtung aus Kunststoff, welche über dem Lichtwellenleiter angeordnet ist, **dadurch gekennzeichnet**, daß direkt auf Primär- oder Sekundärschutzschicht eine dünne Polymerschicht von 1 μm bis 125 μm Stärke und geringer Wasserdampfdurchlässigkeit angeordnet ist.

2. Optische Faser nach Anspruch 1, dadurch gekennzeichnet, daß die Wasserdampfsperrschicht die Oberflächenschutzschicht der optischen Faser versiegelt, indem sie die Poren in der Oberflächenschutzschicht verschließt.

3. Optische Faser nach Anspruch 1 oder 2, dadurch gekennzeichnet, daß die Wasserdampfsperrschicht (4) hydrophob ist.

4. Optische Faser nach einem der Ansprüche 1 bis 3, dadurch gekennzeichnet, daß die Wasserdampfsperrschicht (4) einen geringen Wasserdampfdiffusionskoeffizienten und einen niedrigen Sauerstoffdiffusionskoeffizienten aufweist.

5. Optische Faser nach einem der Ansprüche 1 bis 4, dadurch gekennzeichnet, daß die Wasserdampfsperrschicht (4) vorzugsweise 5 - 20 μm dick ist.

6. Optische Faser nach einem der Ansprüche 1 bis 5, dadurch gekennzeichnet, daß die Wasserdampfsperrschicht 20 - 50 μm dick ist.

7. Optische Faser nach einem der Ansprüche 1 bis 6, dadurch gekennzeichnet, daß die Wasserdampfsperrschicht zur Farbsignierung der optischen Faser verwendet ist.

8. Optische Faser nach einem der Ansprüche 1 bis 7, dadurch gekennzeichnet, daß die Wasserdampfsperrschicht (4) aus Polyvinylalkohol besteht.

9. Optische Faser nach einem der Ansprüche 1 bis 8, dadurch gekennzeichnet, daß die Wasserdampfsperrschicht (4) aus Polyxylylen besteht.

10. Optische Faser nach einem der Ansprüche 1 bis 9, dadurch gekennzeichnet, daß als Wasserdampfsperrschicht Polyparaxylylen, Polymonochloroparaxylylen, Polydichloroparaxylylen oder entsprechende Mischungen dieser Polymere Verwendung finden.

11. Optische Faser nach einem der Ansprüche 1 bis 7, dadurch gekennzeichnet, daß als Wasserdampfsperrschicht ein Acrylat verwendet ist.

12. Optische Faser nach einem der Ansprüche 1 bis 7, dadurch gekennzeichnet, daß ein Kunststoff aus Polyvinylidenchlorid (PVDC) oder Polytrifluorchlorethylen (PCTFE), oder Polytetrafluorethylen (PTFE), oder Polyvinylidenfluorid (PVDF), oder Polyvinylfluorid (PVF) verwendet ist.

13. Verfahren zur Herstellung einer optischen Faser nach einem der Ansprüche 1 bis 12, dadurch gekennzeichnet, daß die Diffusionssperrschicht durch Polymerisation aus der Gasphase hergestellt wird, und daß die Aushärtung mittels energiereicher Strahlen durchgeführt wird.

FIG.1

FIG.2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 710 240  (SIEMENS AG)<br>* Seite 3, Zeilen 39-56; Seite 13, Zeilen 31-44 *<br>— — — | 1,6 | G 02 B 6/16<br>G 02 B 6/44 |
| A | | 2-5,13 | |
| X | PATENT ABSTRACTS OF JAPAN Band 10, Nr. 316<br>(P-510)(2372), 28. Oktober 1986;<br>& JP-A-61126511 (SUMITOMO ELECTRIC IND. LTD.)<br>14.06.1986<br>* ganzes Dokument *<br>— — — | 1,5,6 | |
| A | EP-A-0 135 993  (STANDARD TELEPHONES AND CA-<br>BLES PUBLIC LTD. CO.)<br>* Seite 6, Zeilen 6-27 *<br>— — — | 1,3 | |
| A | PATENT ABSTRACTS OF JAPAN Band 10, Nr. 330<br>(P-514)(2386), 11. November 1986;<br>& JP-A-61137105 (HITACHI CABLE LTD.) 24.06.1986<br>* ganzes Dokument *<br>— — — | 7 | |
| A | PATENT ABSTRACTS OF JAPAN Band 11, Nr. 106<br>(C-414), 3. April 1987;<br>& JP-A-61256949 (NIPPON ELECTRIC GLASS CO. LTD.)<br>14.11.1986<br>* ganzes Dokument *<br>— — — | 1,8 | |
| A | FR-A-2 624 788  (GENERAL ELECTRIC CO.)<br>* Seite 5, Zeile 31 - Seite 6, Zeile 6; Abbildung 1 *<br>— — — | 9,10 | |
| A | PATENT ABSTRACTS OF JAPAN Band 11, Nr. 365<br>(C-460), 27. November 1987;<br>& JP-A-62135520 (NTT) 18.06.1987<br>* ganzes Dokument *<br>— — —<br>—/— | 9,10,13 | |

RECHERCHIERTE SACHGEBIETE (Int. Cl.5)

G 02 B

Der vorliegende Recherchenbericht wurde für alle Patentansprüche erstellt

| Recherchenort | Abschlußdatum der Recherche | Prüfer |
|---|---|---|
| Berlin | 23 Oktober 90 | VON MOERS F |

Seite 2

# EUROPÄISCHER RECHERCHENBERICHT

**Europäisches Patentamt**

Nummer der Anmeldung

**EP 90 10 5427**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 183 853  (MITSUBISHI RAYON)<br>* Seite 12, Zeilen 1,2; Seite 13, Zeilen 1-6; Abbildung 1 *<br>– – – | 1,5,9,10 | |
| X | EP-A-0 162 472  (SUMITOMO CHEMICAL CO. LTD.)<br>* Seite 11, Zeilen 16-25; Zusammenfassung *<br>– – – | 1,11 | |
| A | EP-A-0 097 325  (SUMITOMO CHEMICAL CO. LTD.)<br>* Seite 7 *<br>– – – – – | 1,12 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| Berlin | 23 Oktober 90 | VON MOERS F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------
& : Mitglied der gleichen Patentfamilie, übereinstimmendes Dokument